# EUROPEAN PATENT APPLICATION

(11) **EP 3 955 412 A1**
(43) Date of publication of application: **16.02.2022**
(21) Application number: 19927817.7
(22) Date of filing: 08.05.2019
(51) Int. Cl.: H02J 7/34, H02J 15/00

(54) **CHARGING AND DISCHARGING MEANS AND METHOD, AND TERMINAL DEVICE**

(71) Applicant: GUANGDONG OPPO MOBILE TELECOMMUNICATIONS CORP., LTD., Dongguan, Guangdong 523860 (CN)
(72) Inventor: ZHANG, Jialiang, Dongguan, Guangdong 523860 (CN); XIE, Hongbin, Dongguan, Guangdong 523860 (CN)
(74) Representative: Taor, Simon Edward William
(86) International application number: PCT/CN2019/085925
(87) International publication number: WO 2020/223914

(57) **Abstract**

The present application provides a charging and discharging means and method, and a terminal device. The means comprises: a first branch, the first branch comprising a silicon-based negative electrode lithium ion battery; a second branch, the second branch being connected with the first branch in parallel and comprising a capacitor bank for storing electrical energy and for charging the silicon-based negative electrode lithium-ion battery and/or for supplying power to a device to be powered which is connected to the charging and discharging device. According to the charging and discharging means provided by the present application, a power supply is used to charge the charging and discharging device for ensuring the electric quantity as well as a high charging speed.

## Description

### FIELD OF THE DISCLOSURE

The present disclosure relates to a battery charging technology, and more particularly, to a charging/discharging device, a charging/discharging method, and a terminal device.

### BACKGROUND

As the progress of the electrochemical technology, batteries are widely used in all kinds of electronic devices and tools and the demands for batteries become higher and higher.

Taking a lithium-ion battery as an example, conventionally, the anode of the lithium-ion battery in a cell phone is made with graphite. Accordingly, the lithium-ion battery could have a better performance of storing lithium ions and have a theoretical capacity of 372 Ah/g. However, this still cannot meet the demand for longer battery life. Compared with graphite, silicon has 10 times of capacity. Using the silicon-base anode to replace the graphite anode could raise the battery capacity of the same type of the anode material. However, the conductive performance of silicon is lower than that of the graphite and thus the multiplier performance is comparative lower than that of the pure graphite anode battery. The conventional graphite anode battery's multiplier could be 3C or higher but the silicon-based anode lithium-ion battery's multiplier is lower than 2C.

Therefore, a batter having a better charging speed is required without sacrificing the battery capacity.

### SUMMARY

One objective of an embodiment of the present disclosure is to provide a charging/discharging device, a charging/discharging method, and a terminal device that could raise the charging speed of the battery without sacrificing the battery capacity.

In the first aspect of the present disclosure, a charging/discharging device is disclosed. The charging/discharging device comprises: a first branch circuit, comprising a silicon-based anode lithium-ion battery; and a second branch circuit, connected in parallel with the first branch circuit, the second branch circuit comprising a capacitor set, configured to store an electric power and to charge the silicon-based anode lithium-ion battery and/or provide power to chargeable device connected to the charging/discharging device.

In the charging/discharging device, the silicon-based anode lithium-ion battery is in connected in parallel with a capacitor set. Because the capacitor set has a larger storage capacity and a higher charging speed, when the power supply charges the charging/discharging device, the storage capacity of the charging/discharging device could be guaranteed and the charging speed of the charging/discharging device could be raised. Furthermore, because the capacitor is less sensitive to the temperature, the battery may store any energy when the ambient temperature is too low during the process of charging the battery and the capacitor. However, the capacitor could still store energies and thus raises the storage capacity of the charging/discharging device in a low temperature.

In the second aspect of the present disclosure, a charging/discharging device is disclosed. The charging/discharging device comprises: a first branch circuit, comprising a silicon-based anode lithium-ion battery; a second branch circuit, connected in parallel with the first branch circuit, the second branch circuit comprising a capacitor set, configured to store an electric power and to charge the silicon-based anode lithium-ion battery and/or provide power to chargeable device connected to the charging/discharging device; and a control unit, configured to control the charging path to be first connected to the second branch circuit and then connected to the first branch circuit such that the power supply first charges the capacitor set and then charge the silicon-based anode lithium-ion battery.

In the charging/discharging device, the silicon-based anode lithium-ion battery is in connected in parallel with a capacitor set. Because the capacitor set has a larger storage capacity and higher charging speed, when the power supply charges the charging/discharging device, the storage capacity of the charging/discharging device could be guaranteed and the charging speed of the charging/discharging device could be raised. Furthermore, because the capacitor is less sensitive to the temperature, the battery may store any energy when the ambient temperature is too low during the process of charging the battery and the capacitor. However, the capacitor could still store energies and thus raises the storage capacity of the charging/discharging device in a low temperature. Furthermore, when the power supply charges the charging/discharging device, the electric connection between the battery and the power supply is broken such that the charging speed for the battery to charge the capacitor set is not affected.

In the third aspect of the present disclosure, a charging/discharging device is disclosed. The charging/discharging device comprises: a first branch circuit, comprising a silicon-based anode lithium-ion battery; a second branch circuit, connected in parallel with the first branch circuit, the second branch circuit comprising a capacitor set, configured to store an electric power and to charge the silicon-based anode lithium-ion battery and/or provide power to chargeable device connected to the charging/discharging device; and a control unit, configured to control the chargeable device to be first connected to the second branch circuit and then connected to the first branch circuit such that the capacitor charges the chargeable device and then the silicon-based anode lithium-ion battery charges the chargeable device.

In the charging/discharging device, the silicon-based anode lithium-ion battery is in connected in parallel with a capacitor set. Because the capacitor set has a larger storage capacity and higher charging speed, when the power supply charges the charging/discharging device, the storage capacity of the charging/discharging device could be guaranteed and the charging speed of the charging/discharging device could be raised. Furthermore, because the capacitor is less sensitive to the temperature, the battery may store any energy when the ambient temperature is too low during the process of charging the battery and the capacitor. However, the capacitor could still store energies and thus raises the storage capacity of the charging/discharging device in a low temperature. Furthermore, when the charging/discharging device needs to provide power to the external device, the electric connection between the battery and the power supply is controlled to be established or broken such that the capacitor set could provide power to the external deice. This could prevent the capacitor set from charging the battery and then providing a power to the external device. This could efficiently reduce the power consumption.

In the fourth aspect of the present disclosure, a charging/discharging device is disclosed. The charging/discharging device comprises: a first branch circuit, comprising a silicon-based anode lithium-ion battery; a second branch circuit, connected in parallel with the first branch circuit, the second branch circuit comprising a capacitor set, configured to store an electric power and to charge the silicon-based anode lithium-ion battery and/or provide power to chargeable device connected to the charging/discharging device; and a control unit, configured to block the battery from charging the capacitor set when the voltage level of the battery is larger than the voltage level of the capacitor set.

In the charging/discharging device, the silicon-based anode lithium-ion battery is in connected in parallel with a capacitor set. Because the capacitor set has a larger storage capacity and higher charging speed, when the power supply charges the charging/discharging device, the storage capacity of the charging/discharging device could be guaranteed and the charging speed of the charging/discharging device could be raised. Furthermore, because the capacitor is less sensitive to the temperature, the battery may store any energy when the ambient temperature is too low during the process of charging the battery and the capacitor. However, the capacitor could still store energies and thus raises the storage capacity of the charging/discharging device in a low temperature. Furthermore, when the voltage level of the battery is larger than the voltage level of the capacitor set, the control unit blocks the batter from charging the capacitor set. This could present the battery from inversely charging the capacitor set and avoid the power loss of the circuit.

In the fifth aspect of the present disclosure, a terminal device is disclosed. The terminal device comprises any one of the charging/discharging device of the above-mentioned first to fourth aspect of the present disclosures.

In the sixth aspect of the present disclosure, a charging method is disclosed. The charging method is used in any one of the charging/discharging device of the above-mentioned first to fourth aspect of the present disclosures to charge the chargeable device.

In the seventh aspect of the present disclosure, a charging/discharging method is disclosed. The charging/discharging method comprises: controlling a capacitor set of a second branch circuit connected in parallel with a first branch circuit to store energy; and controlling the capacitor set to charge a silicon-based anode lithium-ion battery of the first branch circuit and/or provide power to chargeable device.

In the eighth aspect of the present disclosure, a charging/discharging method is disclosed. The charging/discharging method comprises: controlling a capacitor set of a second branch circuit connected in parallel with a first branch circuit to store energy; controlling the capacitor set to charge a silicon-based anode lithium-ion battery of the first branch circuit and/or provide power to a chargeable device; and controlling the charging path to be first connected to the second branch circuit and then connected to the first branch circuit such that the power supply first charges the capacitor set and then charge the silicon-based anode lithium-ion battery.

In the ninth aspect of the present disclosure, a charging/discharging method is disclosed. The charging/discharging method comprises: controlling a capacitor set of a second branch circuit connected in parallel with a first branch circuit to store energy; controlling the capacitor set to charge a silicon-based anode lithium-ion battery of the first branch circuit and/or provide power to chargeable device; and controlling the chargeable device to be first connected to the second branch circuit and then connected to the first branch circuit such that the capacitor set first charges the chargeable device and then the silicon-based anode lithium-ion battery charges the chargeable device.

In the tenth aspect of the present disclosure, a charging/discharging method is disclosed. The charging/discharging method comprises: controlling a capacitor set of a second branch circuit connected in parallel with a first branch circuit to store energy; controlling the capacitor set to charge a silicon-based anode lithium-ion battery of the first branch circuit and/or provide power to chargeable device; and blocking the battery from charging the capacitor set when the voltage level of the battery is larger than the voltage level of the capacitor set.

In the eleventh aspect of the present disclosure, a computer readable storage medium is disclosed. The computer readable storage medium stores executable programs. The executable programs are configured to be executed to perform any one of the above-mentioned charging/discharging methods.

In the twelfth aspect of the present disclosure, a computer program product is disclosed. The computer program product comprises computer programs stored in the computer readable storage medium. The computer programs comprise program instructions. When the computer instructions are executed by a computer, the computer performs the above-mentioned charging/discharging method.

### BRIEF DESCRIPTION OF THE DRAWINGS

Fig. 1 is a diagram of a capacitor during a charging process according to an embodiment of the present disclosure.
Fig. 2 is a diagram of a capacitor during a discharging process according to an embodiment of the present disclosure.
Fig. 3 is a diagram of a charging/discharging device according to an embodiment of the present disclosure.
Fig. 4 is a diagram of a charging/discharging device according to another embodiment of the present disclosure.
Fig. 5 is a diagram of a charging/discharging device according to another embodiment of the present disclosure.
Fig. 6 is a block diagram of a terminal device according to an embodiment of the present disclosure.
Fig. 7 is a flow chart of a charging/discharging method according to an embodiment of the present disclosure.
Fig. 8 is a flow chart of a charging/discharging method according to another embodiment of the present disclosure.
Fig. 9 is a flow chart of a charging/discharging method according to another embodiment of the present disclosure.
Fig. 10 is a flow chart of a charging/discharging method according to another embodiment of the present disclosure.

### DETAILED DESCRIPTION

Embodiments of the present disclosure are illustrated in detail in the accompanying drawings, in which like or similar reference numerals refer to like or similar elements or elements having the same or similar functions throughout the specification. The embodiments described below with reference to the accompanying drawings are exemplary and are intended to be illustrative of the present disclosure, and are not to be construed as limiting the scope of the present disclosure.

In order to understand the present disclosure more clearly, the capacitor and its charging and discharging process will be introduced below to facilitate subsequent understanding of the solution of the present disclosure. However, it should be understood that the content introduced below is only for a better understanding of the present disclosure, and should not specifically limit the present disclosure.

A capacitor is a passive device and could store energies in a form of electric fields. If needed, the capacitor could release the stored energy to a circuit. The capacitor could be formed by two conductive parallel plates and insulating/dielectric material is filled up within the space between the plates. Surely, the capacitor could have another structure. For example, the capacitor could be formed by more than two parallel plates or non-parallel plates.

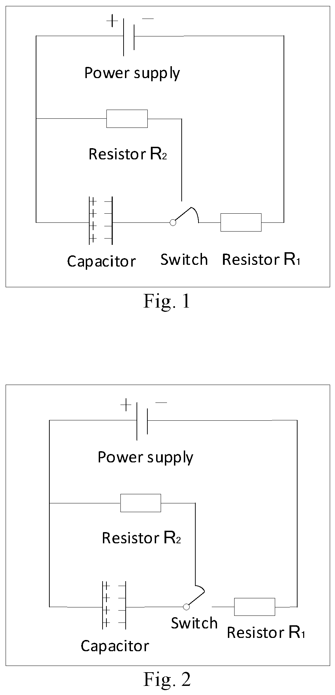

Please refer to Fig. 1 and Fig. 2. Fig. 1 is a diagram of a capacitor during a charging process according to an embodiment of the present disclosure. Fig. 2 is a diagram of a capacitor during a discharging process according to an embodiment of the present disclosure.

As shown in Fig. 1, if the capacitor C is connected to a DC power and a current flows through the circuit, the plates of the capacitor respectively have the same number of charges of different polarities. As the charging process is performed, the voltage difference Vc between the two plates increases. Once the voltage Vc reaches the voltage V of the power supply (Vc=V), the charging operation of the capacitor is complete and thus no current flows.

As shown in Fig. 2, because the charging operation is completed and no current flows, the capacitor could be regarded as an open circuit in a DC circuit. The voltage Vc of the capacitor does not change. After the capacitor is no more connected to the power supply, the capacitor could be connected to a resistor R₂. At this time, the capacitor is discharged through the resistor R₂. The energy stored in the capacitor decreases and the voltage between the plates of the capaicotr decreases until the voltage Vc reaches 0.

While the power supply charges the battery, because the storage capacity of the battery and the charging speed cannot meet the higher demand, a charging/discharging device and power supply method are disclosed to raise the storage capacity of the battery and the charging speed in consideration of the charging/discharging performance of the capacitor.

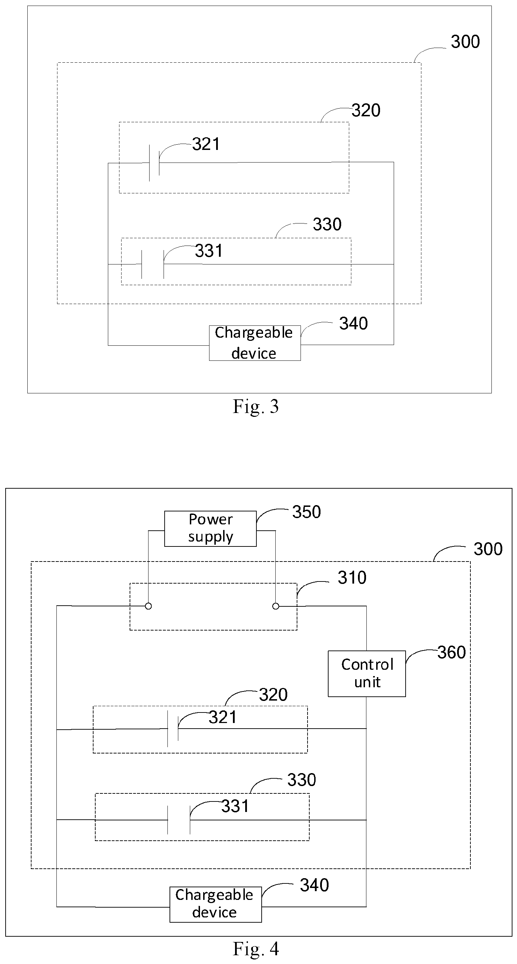

Please refer to Fig. 3. Fig. 3 is a diagram of a charging/discharging device according to an embodiment of the present disclosure.

The charging/discharging device 300 comprises a first branch circuit 320 and a second branch circuit 330 connected in parallel. The first branch circuit 320 comprises a battery 321. The second branch circuit 330 comprises a capacitor set, configured to store electric energies. The capacitor set 331 is configured to charge the batter 321 or provide at least one chargeable device 340 connected to the charging/discharging device 300.

Optionally, the battery could be a silicon-base anode lithium-ion battery or any other types of batteries, such as a storage battery.

In this embodiment, there could be multiple first branch circuits. The multiple first branch circuits are connected in parallel. There could be multiple second branch circuits. The multiple second branch circuits are connected in parallel.

In this embodiment, the capacitor could be a Farad capacitor, which is also called super capacitor. The Farad capacitor has a high charging speed and huge storage capacity.

In this embodiment, the battery and the capacitor set could be respectively placed on different protective plates. The protective plates are connected in parallel. The battery and the capacitor set could be placed on the same protective plate. In this case, the capacitor set is placed in the battery shell or the capacitor set and the batter are separately placed on the protective plate.

The capacitor set 331 could be a single capacitor or multiple capacitors connected in series. The number of the capacitors could be two or more.

In this embodiment, the number of series-connected capacitors could be determined according to the maximum voltage of the battery 321. The breakdown voltage of the capacitor set 331 could be higher than the maximum voltage of the battery 321 to avoid the capacitor(s) being broken down when the maximum voltage of the battery is higher than the breakdown voltage of the capacitor set 331.

If the maximum voltage of the battery 321 is 4.5V and the breakdown voltage of one capacitor 5V. The capacitor 331 (the battery set in this embodiment) could be connected in parallel with the battery 321. When the power supply charges the battery 321 and the capacitor set 331, the capacitor 321, compared with the battery 321, might be charged in a very short period of time. If the charging operation continues, the power supply continuously charges the battery 321. Because the maximum voltage of the battery 321 is 4.5V and the breakdown voltage of the capacitor set 331 is 5V, even if the voltage of the battery 321 reaches the maximum voltage, the maximum voltage of the battery 321 is still lower than the breakdown voltage of the capacitor set 331. In this way, the voltage applied on the capacitor set 331 will not be too high to break down the capacitor set 331 such that the capacitor set 331 is protected.

If the maximum voltage of the battery 321 is 4.5V and the breakdown voltage of a capacitor is 3V, two capacitors having the 3V breakdown voltage are first connected in series with each other and the two series-connected capacitors are connected in parallel with the battery. In this case, the breakdown voltage of the capacitor set 331 is 6V. When the charging path 310 is connected to the power supply 350 (that is, when the power supply charges the battery 321 and the capacitor set 331), even if the voltage of the battery 321 reaches its maximum voltage, the maximum voltage of the battery 321 is still lower than the breakdown voltage of the capacitor set 331. In this way, the voltage applied on the capacitor set 331 is prevented from being too high to break down the capacitor set 331. In contrast, if the two capacitors are not connected in series and are respectively connected in parallel with the battery, when the power supply 350 charges the battery 321 and the capacitor set 331, the voltage of the battery 321 may be higher than the breakdown voltage of the capacitor set 331 and thus the capacitors in the capacitor set 331 will be broken down and out of order.

From the above, two capacitors having the 3V breakdown voltage could be connected in series first. In another embodiment, three or more capacitors could be connected in series and the number of the capacitors could be determined according to the storage capacity of the charging/discharging device.

The models of the capacitors could be the same or different. The breakdown voltages of the capacitors could be the same or different. These changes all fall within the scope of the present disclosure as long as the breakdown voltage of the series-connected capacitors is higher than the maximum voltage of the battery.

In an embodiment, the first branch circuit 320 is connected in parallel with the second branch circuit 330. The first branch circuit 320 comprises a battery. The second branch circuit 330 comprises a capacitor set 331. In this case, the battery 321 is connected in parallel with the capacitor set 331.

In the following disclosure, one single capacitor constitutes the capacitor set as an example for illustration. When the power supply charges the charging/discharging device 300, because the capacitor is quickly charged, the energy stored in the capacitor is much more than that of the battery.

For example, the power supply charges the charging/discharging device 300. Assume the remaining capacities of the battery and the capacitor are both zero. After the charging/discharging device charges the battery and the capacitor for a period of time, the capacity of the battery may increase to be 100mAh and the capacity of the capacitor may increase to be 1000mAh. Compared with the battery, the capacitor could store more electric energy with the same charging time.

In the charging/discharging device 300, the batter is connected in parallel with a capacitor set. Because the capacitor set has a larger storage capacity and higher charging speed, when the power supply charges the charging/discharging device, the storage capacity of the charging/discharging device could be guaranteed and the charging speed of the charging/discharging device could be raised.

Furthermore, because the capacitor is less sensitive to the temperature, the battery may store any energy when the ambient temperature is too low during the process of charging the battery and the capacitor. However, the capacitor could still store energies and thus raises the storage capacity of the charging/discharging device in a low temperature.

In this embodiment, the capacitor set 331 could charge the battery 321 and could provide power to at least one chargeable device connected to the charging/discharging device 300.

In addition, the number of the chargeable device devices could be one or more. The chargeable devices could be the same or different. When the charging/discharging device provides a power to multiple chargeable devices, the charging/discharging device provides the power at the same time or at different time.

Optionally, as shown in Fig. 4, the charging/discharging device 300 could further comprise a charging path 310 and a control unit 360.

The charging path 310 is connected to the power supply 350.

The control unit 360 is configured to control the connection between the charging path 310 and the first branch circuit 320 and/or the second branch 330 such that the power supply 350 charges the battery 321 and/or the capacitor set 331.

In this embodiment, the charging path 310 could be a wire having connectors. The charging path 310 could be connected to the power supply through the connectors. When the power supply 350 is connected to the charging path 310, the power supply 350 could charge the battery 321 and the capacitor set 331.

In this embodiment, there could be a power supply path. The charging/discharging device 300 could provide power to the chargeable device 340 through the power supply path. When the charging path 310 is not connected to the power supply 350, the battery 321 and the capacitor set 331 could supply a power to the chargeable device 340. When the charging path 310 is connected to the power supply 350, the battery 321 and the capacitor set 331 could provide power to the chargeable device 340 while the power supply 350 charges the battery 321 and the capacitor set 331.

In the process when the power supply charges the charging/discharging device 300, the power supply 350 could charge the charging/discharging device and provide power to the chargeable device connected to the charging/discharging device as well.

Assume the chargeable device is a device that needs to be powered in a cell phone. When the power supply charges the cell phone, the power supply charges the battery and the capacitor set and also provides a power to the devices that consume power when the cell phone is running an application (such as a Wechat APP) and is not in the off state. For example, the power supply could supply a power to the display screen of the cell phone.

When the connection between the power supply and the cell phone is broken, if the application is running or the cell phone is not turned off, the battery or the capacitor set supplies a power to the chargeable devices in the cell phone.

Optionally, when the charging path 310 is not connected to the power supply 350, the capacitor 331 is used to charge the battery 321 and/or provide power to the chargeable devices connected to the charging/discharging device.

Specifically, when the charging path 310 is not connected to the power supply 350, the capacitor set 331 charges the battery 321 and the chargeable device 340. Surely, in this embodiment, when the charging path 310 is connected to the power supply 350, the capacitor set 331 charges the battery 321 and provides a power to the chargeable device 340.

When the charging path 310 is connected to the power supply 350, the power supply 350 and the capacitor set 331 charges the battery 321. Because the capacitor set 331 could store electric energies and is charged more quickly during the charging operation. In contrast to a conventional charging/discharging device having only the battery, when the charging path 310 is connected to the power supply, the charging/discharging device 300 could store more power and be charged more quickly. When the charging path 310 is not connected to the power supply 350, the capacitor set 331 could provide power to the chargeable device 340 and charge the battery 321. In contrast to a conventional charging/discharging device having only the battery, the charging/discharging device 300 could provide more power due to the capacitor set that could store electric power.

Optionally, the control unit 360 is configured to control the charging path 310 to be first connected to the second branch circuit 330 and then connected to the first branch circuit 320 such that the power supply 350 first charges the capacitor set 331 and then the battery 321. Or, the control unit 360 is configured to control the charging path 310 to be connected to the first branch circuit 320 and the second branch circuit 330 such that the power supply 350 could charge the battery 321 and the capacitor set 331 at the same time.

When the power supply 350 charges the charging/discharging device 300, if the power supply 350 charges the battery 321 and the capacitor set 331 at the same time, the stored power could be increased within the same period of time. Because the charging speed of the capacitor set is much higher than that of the battery, in the process when the power supply 350 charges the battery and the capacitor set, the battery 321 may affect the charging speed of the power supply 350 charging the capacitor set 331. Therefore, in order to avoid this situation, the control unit 360 could control the charging path 310 to be first connected to the capacitor set 331 and then connected to the battery 321.

In this embodiment, the control unit 360 could be a hardware control unit or a program. This is not a limitation of the present disclosure. Any control unit could be implemented as long as the battery and power supply could be controlled to be connected or disconnected according to the above-mentioned embodiments.

In this embodiment, the control unit 360 could be connected in series with the main circuit connected to the first branch circuit 320 as shown in Fig. 4. Or, the control unit 360 could be connected in series with the first branch circuit 320. These changes fall within the scope of the present disclosure. In an embodiment, when the control unit 360 controls the charging path 310 to be connected to the battery 321, the control unit 360 could control the charging path 310 to be disconnected to the capacitor set 331 and control the charging path 310 to be connected to the capacitor set 331. These changes fall within the scope of the present disclosure.

When the control unit 360 controls the charging path 310 to be first connected to the capacitor set 331 (that is, the charging path 310 is connected to the capacitor set 331) and not to be connected to the battery, the power supply 350 charges only the capacitor set 331 and thus the capacitor set 331 could be quickly charged to a maximum voltage of the capacitor set 331. This could reduce the influences on the charging speed of the capacitor set 331 introduced by the battery 321 if the power supply 350 charges the battery 321 and the capacitor set 331 at the same time.

When the power supply 350 charges the charging/discharging device, the control unit 360 controls the charging path 310 to be connected to the capacitor set 331 in order to control the power supply 350 to charge only the capacitor set 331. This could reduce the influences on the charging speed of the capacitor set 331 when the power supply 350 charges the capacitor set 331.

From the above, the control unit 360 could control the charging path 310 to be first connected to the second branch circuit 330 and then connected to the first branch circuit 330. As to when the control unit 360 could control the charging path 310 to be connected to the second branch circuit 330 and when the control unit 360 could control the charging path 310 to be connected to the first branch circuit 320, the details will be illustrated in the following disclosure.

When detecting that the charging path 310 is connected to the power supply 350, the control unit 360 could control the charging path 310 to be connected to the second branch circuit 330 such that the power supply 350 could charge the capacitor set 331 through the charging path 310. When the voltage of the capacitor set reaches a first threshold value, the control unit 360 could control the charging path 310 to be connected to the first branch circuit 320 such that the power supply 350 could charge the battery 321 through the charging path 310.

Optionally, before the power supply 350 charges the charging/discharging device 300 and under the condition that the capacitor set 331 is connected to the power supply 350, the control unit 360 could control the battery 321 to be disconnected to the power supply 350.

In this embodiment, before the power supply 350 charges the charging/discharging device 300, the control unit 360 could first control the charging path 310 to be disconnected to the first branch circuit 320 and to be connected to the second branch circuit 330. That is, the control unit 360 first controls the battery 321 to be disconnected to the power supply 350 and controls the capacitor set 331 to be connected to the power supply 350. In this case, the power supply 350 charges only the capacitor set 331 and thus the capacitor set 331 could be quickly charged. When the power supply 350 charges the capacitor set 331 and the voltage of the capacitor set 331 reaches the first threshold value, the control unit 360 controls the battery 321 to be connected to the power supply 350 such that the power supply 350 charges the battery.

In an embodiment, the first threshold value could be a maximum voltage of the capacitor set or a value lower than the maximum voltage of the capacitor set. These changes fall within the scope of the present disclosure.

When the power supply 350 charges the capacitor set 331 to the maximum voltage of the capacitor set 331, the control unit 360 controls the charging path 310 to be connected to the second branch circuit 330 (that is, the battery 321 is connected to the power supply 350). In this case, the capacitor set 331 and the power supply 350 could be connected or disconnected. These changes fall within the scope of the present disclosure.

When the charging path 310 and the power supply 350 are not connected, the capacitor set 331 could first provide power to the chargeable device 340 and then the battery 321 provides a power to the chargeable device 340.

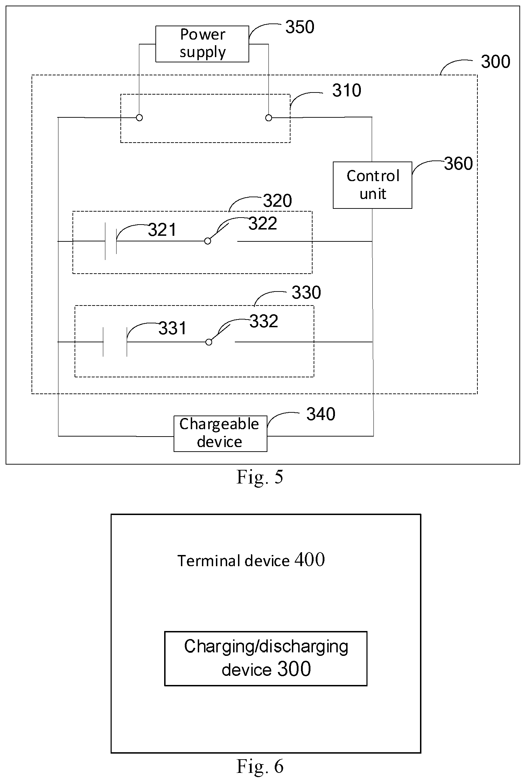

Optionally, the first branch circuit 320 comprises a first switch 322 connected in series with the battery 321. The second branch circuit 330 could comprise a second switch 332 connected in series with the capacitor set 331. As shown in Fig. 5, the control unit 360 could turn on the first switch 332 to connect the charging path 310 to the first branch circuit 320 and turn on the first switch to connect the charging path 310 to the second branch circuit 330.

The first switch 322 is connected in series with the first branch circuit 320 and could be connected in series with other branch circuits or main circuit. This is not a limitation of the present disclosure as long as the control unit 360 could control the on/off state of the first switch 322.

The second switch 332 is connected in series with the second branch circuit 330 and could be connected in series with other branch circuits or main circuit. This is not a limitation of the present disclosure as long as the control unit 360 could control the on/off state of the second switch 332.

When the charging/discharging device 300 provides a power to the chargeable device 340 connected to the charging/discharging device 300, the battery 321 could provide power to the chargeable device 340 and the capacitor set 331 could provide power to the chargeable device 340. Or, the capacitor set 331 charges the battery 321 and then the battery 321 provides a power to the chargeable device 340. These changes all fall within the scope of the present disclosure.

In the process that the capacitor 331 charges the battery 3231 and then the battery 321 provides a power to the chargeable device 340, there might be power consumption. Therefore, the control unit 360 could control the connection between the chargeable device 340 and the battery 321 and/or the capacitor set 331.

Optionally, when the charging path 310 is not connected to the power supply 350, the control unit 360 controls the chargeable device 340 to be connected to the second branch circuit 320. In this case, the capacitor set 331 in the second branch circuit 320 provides a power to the chargeable device 340. Then, the control unit 360 controls the chargeable device 340 to be connected to the first branch circuit 330 such that the battery 321 in the first branch circuit 330 provides a power to the chargeable device 340.

When the control unit 360 detects that the charging path 310 is not connected to the power supply 350, the control unit 360 controls the chargeable device 340 to be first connected to the second branch circuit 330 and then connected to the first branch circuit 320. This could allow the capacitor 331 to first provide power to the chargeable device 340 and allow the battery 321 to then provide power to the chargeable device 340.

Optionally, when the control unit 360 detects that the charging path 310 is not connected to the power supply 350, if the voltage of the capacitor set 331 is higher than or equal to the second threshold value, the control unit 360 controls the chargeable device 340 to be connected to the second branch circuit 330 such that the capacitor set 331 provides a power to the chargeable device 340. When the voltage of the capacitor set 331 is lower than the second threshold value, the control unit 360 controls the chargeable device 340 to be connected to the first branch circuit 320 such that the battery 321 provides a power to the chargeable device 340.

When the control unit 360 controls the chargeable device 340 to be connected to the second branch circuit 330 (that is, the capacitor set 331 connected to the chargeable device 340), the battery 321 and the chargeable device 340 are disconnected. In this case, the capacitor set 331 directly provides a power to the chargeable device 340. This could avoid the capacitor set 331 charging the battery 321 first and the battery 321 then providing a power to the capacitor set 331. Therefore, the power consumption during the power supply process is reduced.

When the charging/discharging device 300 provides a power to the chargeable device 340, the control unit 360 controls the chargeable device 340 to be connected to the second branch circuit 330. That is, the control unit 360 controls the capacitor set 331 to be connected to the chargeable device 340 and controls the battery 321 to be not connected to the chargeable device 340. This could avoid the capacitor set 331 charging the battery 321 first and the battery 321 then providing a power to the capacitor set 331. Therefore, the power consumption during the power supply process is reduced

When the charging/discharging 300 provides a power to the chargeable device 340, in order to reduce power consumption, the control unit 360 controls the battery 321 to be disconnected to the chargeable device 340. If the voltage of the capacitor set 331 is lower, this means that the capacitor set 331 may not be able to provide power to the chargeable device 340. Therefore, it needs to consider whether the capacitor set 331 provides a power to the chargeable device 340.

Optionally, when the charging/discharging 300 provides a power to the chargeable device 340, the control unit 360 could control the chargeable device 340 to be connected to the second branch circuit 330 if the voltage of the capacitor set 331 is larger than or equal to the second threshold such that the capacitor set 331 provides a power to the chargeable device 340. If the voltage of the capacitor set 331 is lower than the second threshold value, the control unit 360 then controls the chargeable device 340 to be connected to the first branch circuit 320 such that the battery 321 provides a power to the chargeable device 340.

In this embodiment, the voltage of the capacitor set 331 could be real-time monitored by a monitoring unit. If the voltage of the capacitor set 331 is larger than or equal to the second threshold value, the control unit 360 controls the capacitor set 330 to be connected to the chargeable device 340 and controls the battery 321 to be disconnected to the chargeable device 340. In this case, the capacitor set 331 provides a power to the chargeable device 340. When the voltage of the capacitor set 331 is lower than the second threshold value, the control unit 360 controls the battery 321 to be connected to the chargeable device 340. At this time, the battery 321 provides a power to the chargeable device 340.

In this embodiment, the control unit 360 controls the chargeable device 340 to be connected to the first branch circuit 320 again. In this case, the chargeable device 340 could be connected or disconnected to the second branch 330. These changes fall within the scope of the present disclosure. When the chargeable device 340 is connected to the second branch circuit 330, the battery 321 could provide power to the chargeable device 340 and could charge the capacitor set 331. When the chargeable device 340 is disconnected to the second branch circuit 330, the battery 321 could provide power to the chargeable device 340.

In this embodiment, the second threshold value could be determined according to the chargeable device 340 or according to the experiences.

In an extreme case, the second threshold value could be zero. That is, the capacitor set 331 could provide power to the chargeable device 340 only when the capacitor set 331 has a power (the voltage is larger than 0). Or, the second threshold value could be set according to experiences. For example, from the experiences, when the charging/discharging device charges the chargeable device 340, if the voltage of the capacitor set 331 is larger than 3V, the charging/discharging device provides a power to the chargeable device 340. In this case, the second threshold value could be set as 3.

In the charging/discharging device 300, when the control unit provides a power to the charging/discharging device and the voltage of the capacitor set is larger than or equal to the second threshold value, the control unit controls the chargeable device to be connected to the capacitor set and controls the chargeable device to be disconnected to the battery. This could reduce the power consumption and ensure the power supply from the capacitor set to the chargeable device.

Optionally, the first branch circuit 320 comprises a first switch 322 connected in series with the battery 321 and the second branch circuit 330 comprises a second switch 332 connected in series with the capacitor set 331. As shown in Fig. 5, the control unit 360 could turn on the first switch 322 to connect the chargeable device 340 to the first branch 320 or turn on the second switch 332 to connect the chargeable device 340 to the second branch 330.

In an embodiment, the first switch 322 is connected in series with the first branch circuit 320 and could be connected in series with other branch circuits or a main circuit. This is not a limitation of the present disclosure as long as the control unit 360 could control the on/off state of the first switch 322 to control the connection between the chargeable device 340 and the first branch circuit 320.

Similarly, the second switch 332 is connected in series with the second branch circuit 330 and could be connected in series with other branch circuits or a main circuit. This is not a limitation of the present disclosure as long as the control unit 360 could control the on/off state of the second switch 332 to control the connection between the chargeable device 340 and the second branch circuit 330.

The above disclosure illustrates how the power supply charges the charging/discharging device 300 and how the charging/discharging device provides a power to the chargeable device 340. In the above two processes, the power supply and the capacitor set are in the working state (when the power supply charges the chargeable device, the power supply could charge the battery and the capacitor set; and when the charging/discharging device provides a power to the chargeable device, the battery and capacitor set could provide power to the chargeable device at the same time). If the voltage of the battery is higher than capacitor set, the battery may inversely charge the capacitor set. This causes the power loss and thus it should prevent the battery from inversely charging the capacitor set.

Optionally, the control unit 360 blocks the battery 321 from charging the capacitor set 331 if the battery voltage is higher than the voltage of the capacitor set.

In the charging/discharging device 300, if the battery voltage is higher than that of the capacitor set, the control unit 360 blocks the battery 321 from charging the capacitor set 331. This prevents the battery 321 from inversely charging the capacitor set 331 to alleviate the power loss.

Optionally, the first branch circuit 320 comprises a first switch 322 connected in series with the battery 321 and the second branch circuit 330 comprises a second switch 332 connected in series with the capacitor set 331. The control unit 360 could turn off the first switch 322 to block the battery 321 from charging the capacitor set 331 and the control unit 360 could turn off the second switch 332 to block the battery 321 from charging the capacitor set 331.

In an embodiment, when the power supply 350 charges the battery 321 and the capacitor set 331, if the battery voltage is higher than the voltage of the capacitor set, the control unit 360 turns off the first switch 322. At this time, the power supply 350 charges the capacitor set 331. Or, the control unit 360 turns off the second switch 332. At this time, the power supply charges only the battery 321 and the battery 321 does not inversely charge the capacitor set 331.

When the charging/discharging device 300 provides a power to the chargeable device 340 (the first switch 322 and the second switch 332 are both turned on), if the battery voltage is higher than the voltage of the capacitor set, the control unit 360 turns off the first switch 322 such that the connection between the battery 321 and the capacitor set 332 is broken. In this way, the battery 321 does not inversely charge the capacitor set 331. At this time, the capacitor set 331 provides a power to the chargeable device 340. Or, the control unit 360 turns off the second switch 332 such that the connection between the battery 321 and the capacitor set 332 is broken. In this way, the battery 321 does not inversely charge the capacitor set 331. At this time, the battery 321 provides a power to the chargeable device 340.

If the battery voltage is higher than the voltage of the capacitor set, the control unit is used to block the battery from inversely charging the capacitor set. In some case, the capacitor set could charge the battery.

Optionally, the control unit 360 could control the capacitor set 331 to charge the battery 321 when the battery voltage is higher than the voltage of the capacitor set.

In the charging/discharging device 300, when the battery voltage is higher than the voltage capacitor set, the third control unit controls the capacitor set to charge the battery. This could avoid the battery from inversely charging the capacitor set. Because the capacitor set could store the power in a short period of time, the power of the capacitor set is transferred to the battery. In this way, the charging/discharging device 300 could provide power to the chargeable device at any time.

In this embodiment, the battery voltage and the voltage of the capacitor set could be monitored by the voltage monitoring unit. The voltage monitoring unit could real-time monitor the battery voltage and the voltage of the capacitor set and could send the monitored voltages to the control unit of the above-mentioned embodiments.

The voltage monitoring unit for monitoring the battery voltage and the voltage monitoring unit for monitoring the voltage of the capacitor set could be the same monitoring unit or different monitoring units. These changes obey the spirit of the present disclosure as long as the battery voltage and the voltage of the capacitor set could be monitored.

The control units disclosed in the above embodiments could be the same control unit or different control units. For example, a first control unit, a second control unit and a third control unit could be used to perform corresponding functions. These changes all fall within the scope of the present disclosure.

Optionally, in an embodiment, if the control units are different, the first control unit, the second control unit and the third control unit could be integrated in one control device. That is, a single control device is used to perform the functions of the first control unit, the second control unit and the third control unit. Or, the first control unit, the second control unit and the third control unit could be implemented with different control devices.

Please refer to Fig. 6. Fig. 6 is a block diagram of a terminal device 400 according to an embodiment of the present disclosure. The terminal device 400 comprises a charging/discharging device 300. The terminal device 400 could be a cell phone, a laptop, or a camera.

In an embodiment, a power supply method is disclosed. the power supply method is adopted in the charging/discharging device 300 in any of the above-mentioned embodiments to charge the chargeable device.

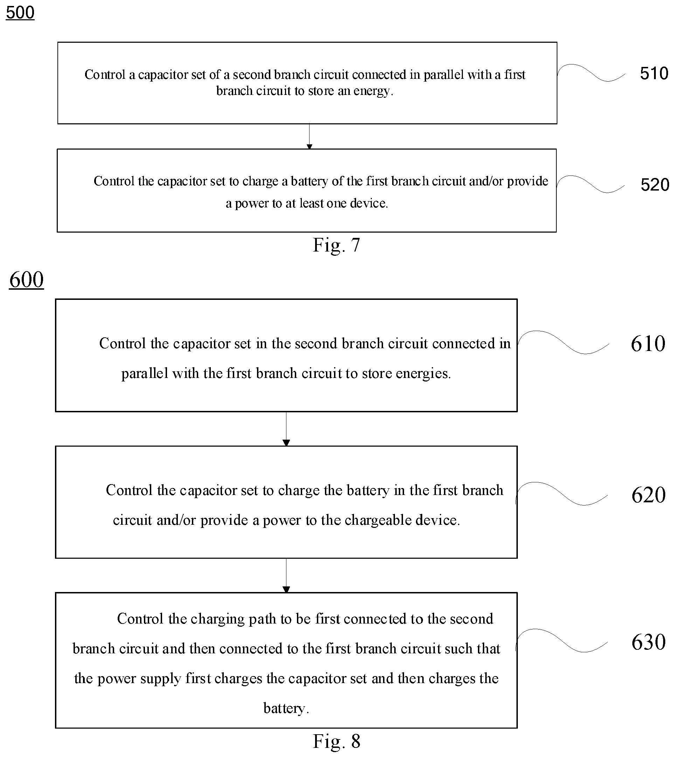

In the above illustration, the charging/discharging device in multiple embodiments is illustrated in coordination with Fig. 1-Fig. 6. In the following disclosure, the charging/discharging method in multiple embodiments will be illustrated in coordination with Fig. 7-Fig. 10. The method is corresponding to the above-mentioned device and thus some details could be referred to the above device embodiments and may be omitted for simplicity.

Please refer to Fig. 7. Fig. 7 is a flow chart of a charging/discharging method 500 according to an embodiment of the present disclosure. The charging/discharging method 500 could comprise blocks 510 and 520.

Block 510: control a capacitor set of a second branch circuit connected in parallel with a first branch circuit to store energy.

Block 520: control the capacitor set to charge a battery of the first branch circuit and/or provide power to chargeable device.

Optionally, the method includes controlling a charging path to be connected to the first branch circuit 320 and/or the second branch circuit 330 such that the power supply charges the battery and/or the capacitor set.

Optionally, the method includes controlling the capacitor set to charge the battery in the first branch circuit and/or provide power to the chargeable device 340 when the charging path is not connected to the power supply.

Optionally, the block of controlling a charging path to be connected to the first branch circuit 320 and/or the second branch circuit 330 such that the power supply charges the battery and/or the capacitor set comprises: controlling the charging path to first connected to the second branch circuit and then connected to the first branch such that the power supply first charges the battery and then charges the capacitor set. Or, the block could comprise controlling the charging path to be connected to the first branch and the second branch such that the power supply charges the battery and the capacitor set at the same time.

Optionally, the block of controlling the charging path to first connected to the second branch circuit and then connected to the first branch comprises: when the charging path is connected to the power supply, controlling the charging path to be first connected to the second branch circuit such that the power supply charges the capacitor set; and controlling the charging path to be then connected to the first branch circuit such that the power supply charges the battery if the voltage of the capacitor set reaches the first threshold value.

Optionally, the block of controlling the charging path to be connected to the first branch circuit is accomplished by controlling the first switch connected in series with the battery in the first branch circuit. The block of controlling the charging path to be connected to the second branch circuit is accomplished by controlling the second switch connected in series with the capacitor set in the second branch circuit.

Optionally, the method 500 further comprises: when the charging path is not connected to the power supply, controlling the chargeable device to be first connected to the second branch circuit and then connected to the first branch circuit such that the capacitor set first provides a power to the chargeable device and the battery then provides a power to chargeable device.

Optionally, the block of controlling the chargeable device to be first connected to the second branch and then connected to the first branch comprises: when the charging path is not connected to the power supply and the voltage of the capacitor set is larger than or equal to the second threshold value, controlling the chargeable device to be first connected to the second branch circuit such that the capacitor set provides a power to the chargeable device; and when the voltage of the capacitor set is lower than the second threshold value, controlling the chargeable device to be then connected to the first branch circuit such that the battery provides a power to the chargeable device.

Optionally, the connection between the chargeable device and the first branch circuit is achieved by controlling the first switch connected in series with the battery in the first branch circuit. The connection between the chargeable device and the second branch circuit is achieved by controlling the second switch connected in series with the capacitor set in the second branch circuit.

Optionally, the method 500 further comprises: blocking the battery from charging the capacitor set when the battery voltage is higher than the voltage of the capacitor set.

Optionally, the block of blocking the battery from charging the capacitor set comprises: turning off the first switch connected in series with the battery in the first branch to block the battery from charging the capacitor set. Or, the block comprises: turning off the second switch connected in series with the capacitor set in the second branch to block the battery from charging the capacitor set.

Optionally, the maximum voltage of the battery is lower than the breakdown voltage of the capacitor set.

Please refer to Fig. 8. Fig. 8 is a flow chart of a charging/discharging method according to another embodiment of the present disclosure. The charging method comprises blocks 610-630.

Block 610: control the capacitor set in the second branch circuit connected in parallel with the first branch circuit to store energies.

Block 620: control the capacitor set to charge the battery in the first branch circuit and/or provide power to the chargeable device.

Block 630: control the charging path to be first connected to the second branch circuit and then connected to the first branch circuit such that the power supply first charges the capacitor set and then charges the battery.

Optionally, the block of controlling the capacitor set to charge the battery in the first branch circuit and/or provide power to the chargeable device comprises: when the charging path is not connected to the power supply, controlling the capacitor set to charge the battery in the first branch circuit and/or provide power to the chargeable device.

Optionally, the method 600 further comprises: controlling the charging path to be connected to the first branch circuit and/or the second branch circuit such that the power supply charges the battery and/or the capacitor set.

Optionally, the block of controlling the capacitor set to charge the battery in the first branch circuit and/or provide power to the chargeable device comprises: when the charging path is not connected to the power supply, controlling the capacitor set to charge the battery in the first branch circuit and/or provide power to the chargeable device.

Optionally, the block of controlling the charging path to first connected to the second branch circuit and then connected to the first branch comprises: when the charging path is connected to the power supply, controlling the charging path to be first connected to the second branch circuit such that the power supply charges the capacitor set; and controlling the charging path to be then connected to the first branch circuit such that the power supply charges the battery if the voltage of the capacitor set reaches the first threshold value.

Optionally, the block of controlling the charging path to be connected to the first branch circuit is accomplished by controlling the first switch of the first branch circuit connected in series with the battery. The block of controlling the charging path to be connected to the second branch circuit is accomplished by controlling the second switch of the second branch circuit connected in series with the capacitor set.

Optionally, when the charging path is not connected to the power supply, the method controls the chargeable device to be first connected to the second branch circuit and then connected to the first branch circuit such that the capacitor set first provides the power to the chargeable device and then the battery provides the power to the chargeable device.

Optionally, the block of controlling the charging path to be first connected to the second branch circuit and then connected to the first branch circuit comprises: when detecting that the charging path is not connected to the power supply and the voltage of the capacitor set is higher than or equal to the second threshold value, controlling the chargeable device to be first connected to the second branch circuit such that the capacitor set provides a power to the chargeable device; and when the voltage of the capacitor set is lower than the second threshold value, controlling the chargeable device to be then connected to the first branch circuit such that the battery provides a power to the chargeable device.

Optionally, the connection between the chargeable device and the first branch circuit is achieved by controlling the first switch connected in series with the battery in the first branch circuit. The connection between the chargeable device and the second branch circuit is achieved by controlling the second switch connected in series with the capacitor set in the second branch circuit.

Optionally, the method 600 could further comprise: blocking the battery from charging the capacitor set when the battery voltage is higher than the voltage of the capacitor set.

Optionally, the block of blocking the battery from charging the capacitor set comprises: turning off the first switch connected in series of the battery in the first branch circuit to block the battery from charging the capacitor set. Or, the block of blocking the battery from charging the capacitor set comprises: turning off the second switch connected in series of the capacitor set in the second branch circuit to block the battery from charging the capacitor set.

Optionally, a maximum voltage level of the battery is lower than a breakdown voltage of the capacitor set.

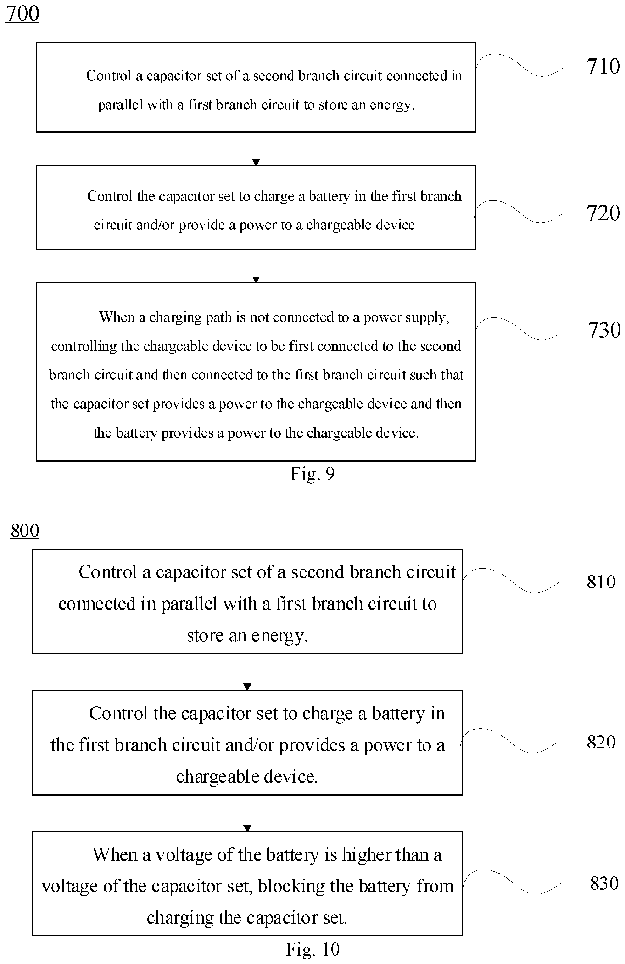

Please refer to Fig. 9. Fig. 9 is a flow chart of a charging/discharging method 700 according to another embodiment of the present disclosure. The charging/discharging method 700 comprises blocks 710-730.

Block 710: controlling a capacitor set of a second branch circuit connected in parallel with a first branch circuit to store energy.

Block 720: controlling the capacitor set to charge a battery in the first branch circuit and/or provide power to a chargeable device.

Block 730: when a charging path is not connected to a power supply, controlling the chargeable device to be first connected to the second branch circuit and then connected to the first branch circuit such that the capacitor set provides a power to the chargeable device and then the battery provides a power to the chargeable device.

Optionally, the block of controlling the charging path to be first connected to the second branch circuit and then connected to the first branch circuit comprises: when detecting that the charging path is not connected to the power supply and the voltage of the capacitor set is higher than or equal to the second threshold value, controlling the chargeable device to be first connected to the second branch circuit such that the capacitor set provides a power to the chargeable device; and when the voltage of the capacitor set is lower than the second threshold value, controlling the chargeable device to be then connected to the first branch circuit such that the battery provides a power to the chargeable device.

Optionally, the connection between the chargeable device and the first branch circuit is achieved by controlling the first switch connected in series with the battery in the first branch circuit. The connection between the chargeable device and the second branch circuit is achieved by controlling the second switch connected in series with the capacitor set in the second branch circuit.

Optionally, the method 700 further comprises: when the battery voltage is higher than the voltage of the capacitor set, blocking the battery from charging the capacitor set.

Optionally, the block of blocking the battery from charging the capacitor set comprises: turning off the first switch connected in series of the battery in the first branch circuit to block the battery from charging the capacitor set. Or, the block of blocking the battery from charging the capacitor set comprises: turning off the second switch connected in series of the capacitor set in the second branch circuit to block the battery from charging the capacitor set.

Optionally, a maximum voltage level of the battery is lower than a breakdown voltage of the capacitor set.

Please refer to Fig. 10. Fig. 10 is a flow chart of a charging/discharging method 800 according to another embodiment of the present disclosure. The charging/discharging method 800 comprises blocks 810-830.

Block 810: controlling a capacitor set of a second branch circuit connected in parallel with a first branch circuit to store energy.

Block 820: controlling the capacitor set to charge a battery in the first branch circuit and/or provides a power to a chargeable device.

Block 830: when a voltage of the battery is higher than a voltage of the capacitor set, blocking the battery from charging the capacitor set.

Optionally, the block of blocking the battery from charging the capacitor set comprises: turning off the first switch connected in series of the battery in the first branch circuit to block the battery from charging the capacitor set. Or, the block of blocking the battery from charging the capacitor set comprises: turning off the second switch connected in series of the capacitor set in the second branch circuit to block the battery from charging the capacitor set.

Optionally, a maximum voltage level of the battery is lower than a breakdown voltage of the capacitor set.

In an embodiment, a non-transitory computer readable storage medium is disclosed. The non-transitory computer readable storage medium stores executable instructions, configured to be executed by a computer to perform any one of the methods 500-800.

In an embodiment, a computer program product is disclosed. The computer program product comprises a computer program stored in the computer storage medium. The computer program comprises program instructions, configured to be executed by a computer to perform any one of the methods 500-800.

In the above-mentioned embodiments, it may be implemented in whole or in part by software, hardware, firmware or any other combination. When implemented by software, it can be implemented in the form of a computer program product in whole or in part. The computer program product includes one or more computer instructions. When the computer program instructions are loaded and executed on the computer, the processes or functions described in the embodiments of the present invention are generated in whole or in part. The computer may be a general-purpose computer, a special-purpose computer, a computer network, or other programmable devices. The computer instructions may be stored in a non-transitory computer-readable storage medium, or transmitted from one non-transitory computer-readable storage medium to another non-transitory computer-readable storage medium. For example, the computer instructions may be transmitted from a website, computer, server, or data center. Transmission to another website, computer, server or data center via wired device (such as coaxial cable, optical fiber, digital subscriber line (DSL)) or wireless signal (such as infrared, wireless, microwave, etc.). The computer-readable storage medium may be any available medium that can be accessed by a computer or a data storage device such as a server or data center integrated with one or more available media. The usable medium may be a magnetic medium (for example, a floppy disk, a hard disk, a magnetic tape), an optical medium (for example, a digital video disc (DVD)), or a semiconductor medium (for example, a solid state disk (SSD)), etc.

A person having ordinary skill in the art may realize that the units and algorithm steps of the examples described in combination with the embodiments disclosed herein can be implemented by electronic hardware or a combination of computer software and electronic hardware. Whether these functions are executed by hardware or software depends on the specific application and design constraint conditions of the technical solution. Technicians can use different methods for each specific application to implement the described functions, but such implementation should not be considered beyond the scope of the present disclosure.

In the several embodiments of the present disclosure, it should be understood that the disclosed system, device, and method may be implemented in other ways. For example, the device embodiments described above are only illustrative. In addition, the division of the units is only a logical function division, and there may be other divisions in actual implementation. Multiple units or components may be combined or can be integrated into another system, or some features can be ignored or not implemented. In addition, the displayed or discussed mutual coupling or direct coupling or communication connection may be indirect coupling or communication connection through some interfaces, devices or units, and may be in electrical, mechanical or other forms.

When used in this application, although the terms "first", "second", etc. may be used in the present disclosure to describe various devices, these devices should not be limited by these terms. These terms are only used to distinguish one device from another. For example, without changing the meaning of the description, the first device can be called the second device, and similarly, the second device can be called the first device. The first device and the second device are both devices, but they may not be the same device.

The units described as separate components may or may not be physically separated, and the components displayed as units may or may not be physical units, that is, they may be located in one place, or they may be distributed on multiple network units. Some or all of the units may be selected according to actual needs to achieve the objectives of the solutions of the embodiments.

In addition, the functional units in the various embodiments of the present disclosure may be integrated into one processing unit, or each unit may exist alone physically, or two or more units may be integrated into one unit.

Above are embodiments of the present disclosure, which does not limit the scope of the present disclosure. Any modifications, equivalent replacements or improvements within the spirit and principles of the embodiment described above should be covered by the protected scope of the disclosure.

## Claims

1. A charging/discharging device, **characterized in that** the charging/discharging device comprises:
a first branch circuit, comprising a silicon-based anode lithium-ion battery; and
a second branch circuit, connected in parallel with the first branch circuit, the second branch circuit comprising a capacitor set, configured to store an electric power and to charge the silicon-based anode lithium-ion battery and/or provide power to a chargeable device connected to the charging/discharging device.

2. The charging/discharging device of claim 1, **characterized in that** the charging/discharging device further comprises:
a charging path, connected to a power supply; and
a control unit, configured to control the charging path to be connected to the first branch circuit and/or the second branch circuit such that the power supply charges the silicon-based anode lithium-ion battery and/or provides the power to the chargeable device connected to the charging/discharging device.

3. The charging/discharging device of claim 1 or claim 2, **characterized in that** when the charging path is not connected to the power supply, the capacitor set is configured to charge the silicon-based anode lithium-ion battery and/or provide the power to the chargeable device connected to the charging/discharging device.

4. The charging/discharging device of claim 2, **characterized in that** the control unit is configured to control the charging path to be first connected to the second branch circuit and then connected to the first branch circuit such that the power supply first charges the capacitor set and then charge the silicon-based anode lithium-ion battery.

5. The charging/discharging device of claim 4, **characterized in that** the control unit is further configured to control the charging path to be first connected to the second branch circuit when the control unit detects that charging path is connected to the power supply such that the power supply first charges the capacitor set and to control the charging path to be then connected to the first branch circuit when a voltage of the capacitor set reaches a first threshold value such that the power supply charges the silicon-based anode lithium-ion battery.

6. The charging/discharging device of claim 4 or claim 5, **characterized in that** the first branch circuit comprises a first switch connected in series with the silicon-based anode lithium-ion battery; the second branch circuit comprises a second switch connected in series with the capacitor set; and the control unit is further configured to turn on the first switch to control the charging path to be connected to the first branch circuit and to turn on the second switch to control the charging path to be connected to the second branch circuit.

7. The charging/discharging device of any one of claims 1-6, **characterized in that** the charging/discharging device further comprises:
a control unit, configured to control the chargeable device to be first connected to the second branch circuit and then connected to the first branch circuit when the charging path is not connected to the power supply such that the capacitor set first charges the chargeable device and then the silicon-based anode lithium-ion battery charges the chargeable device.

8. The charging/discharging device of claim 7, **characterized in that** the control unit is configured to control the chargeable device to be first connected to the second branch circuit when the control unit detects that the charging path is not connected to the power supply and a power level of the capacitor set is greater than or equal to a second threshold such that the capacitor set charges the chargeable device.

9. The charging/discharging device of claim 7 or claim 8, **characterized in that** the first branch comprises a first switch connected in series with the silicon-based anode lithium-ion battery; the second branch circuit comprises a second switch connected in series with the capacitor set; and the control unit is further configured to turn on or turn off the first switch to control the chargeable device to be connected to the first branch circuit and to turn on or turn off the second switch to control the chargeable device to be connected to the second branch circuit.

10. The charging/discharging device of any one of claims 1-9, **characterized in that** the charging/discharging device further comprises:
a control unit, configured to block the silicon-based anode lithium-ion battery from charging the capacitor set when a voltage level of the silicon-based anode lithium-ion battery is greater than a voltage level of the capacitor set.

11. The charging/discharging device of claim 10, **characterized in that** the first branch circuit comprises a first switch connected in series with the silicon-based anode lithium-ion battery; the second branch circuit comprises a second switch connected in series with the capacitor set; and the control unit is further configured to turn off the first switch to block the silicon-based anode lithium-ion battery from charging the capacitor set and to turn off the second switch to block the silicon-based anode lithium-ion battery from charging the capacitor set.

12. The charging/discharging device of any one of claims 1-11, **characterized in that** a maximum voltage level of the silicon-based anode lithium-ion battery is lower than a breakdown voltage of the capacitor set.

13. A terminal device, **characterized in that** the terminal device comprises a charging/discharging device of any one of claims 1-12.

14. A charging method, adopted in a charging/discharging device of any one of claims 1-12, configured to charge the chargeable device.

15. A charging/discharging method, **characterized in that** the method comprises:
controlling a capacitor set of a second branch circuit connected in parallel with a first branch circuit to store energy; and
controlling the capacitor set to charge a silicon-based anode lithium-ion battery of the first branch circuit and/or provide power to chargeable device.

16. The charging/discharging method of claim 15, **characterized in that** the method further comprises:
controlling a charging path to be connected to the first branch circuit and/or the second branch circuit such that a power supply charges the silicon-based anode lithium-ion battery and/or the capacitor set.

17. The charging/discharging method of claim 15 or claim 16, **characterized in that** the controlling the capacitor set to charge the silicon-based anode lithium-ion battery of the first branch circuit and/or provide the power to the chargeable device comprises:
controlling the capacitor set to charge the silicon-based anode lithium-ion battery of the first branch circuit and/or provide the power to the chargeable device when the charging path is not connected to the power supply.

18. The charging/discharging method of claim 16, **characterized in that** the controlling a charging path to be connected to the first branch circuit and/or the second branch circuit such that a power supply charges the silicon-based anode lithium-ion battery and/or the capacitor set, comprises:
controlling the charging path to be first connected to the second branch circuit and then connected to the first branch circuit such that the power supply first charges the capacitor set and then charge the silicon-based anode lithium-ion battery; or
controlling the charging path to be connected to the first branch circuit and the second branch circuit such that a power supply simultaneously charges the silicon-based anode lithium-ion battery and the capacitor set.

19. The charging/discharging method of claim 18, **characterized in that** the controlling the charging path to be first connected to the second branch circuit and then connected to the first branch circuit, comprises:
controlling the charging path to be first connected to the second branch circuit when the control unit detects that charging path is connected to the power supply such that the power supply first charges the capacitor set; and
controlling the charging path to be then connected to the first branch circuit when a voltage of the capacitor set reaches a first threshold value such that the power supply charges the silicon-based anode lithium-ion battery.

20. The charging/discharging method of claim 18 or claim 19, **characterized in that** the controlling the charging path to be connected to the first branch circuit is realized by controlling a first switch of the first branch circuit connected in series with the silicon-based anode lithium-ion battery;
the controlling the charging path to be connected to the second branch circuit is realized by controlling a second switch of the second branch circuit connected in series with the capacitor set.

21. The charging/discharging method of any one of claims 15-20, **characterized in that** the method further comprises:
controlling the chargeable device to be first connected to the second branch circuit and then connected to the first branch circuit when the charging path is not connected to the power supply such that the capacitor set first charges the chargeable device and then the silicon-based anode lithium-ion battery charges the chargeable device.

22. The charging/discharging method of claim 21, **characterized in that** the controlling the chargeable device to be first connected to the second branch circuit and then connected to the first branch circuit, comprises:
controlling the chargeable device to be first connected to the second branch circuit when the control unit detects that the charging path is not connected to the power supply and a power level of the capacitor set is greater than or equal to a second threshold, such that the capacitor set charges the chargeable device; and
controlling the chargeable device to be connected to the first branch circuit when the power level of the capacitor set is less than the second threshold, such that the silicon-based anode lithium-ion battery charges the chargeable device

23. The charging/discharging method of claim 21 or claim 22, **characterized in that** the controlling the chargeable device to be connected to the first branch circuit is realized by controlling a first switch of the first branch circuit connected in series with the silicon-based anode lithium-ion battery; and
the controlling the chargeable device to be connected to the second branch circuit is realized by controlling a second switch of the second branch circuit connected in series with the capacitor set.

24. The charging/discharging method of any one of claims 15-23, **characterized in that** the method further comprises:
blocking the silicon-based anode lithium-ion battery from charging the capacitor set when a voltage level of the silicon-based anode lithium-ion battery is greater than a voltage level of the capacitor set.

25. The charging/discharging method of claim 24, **characterized in that** the blocking the silicon-based anode lithium-ion battery from charging the capacitor set, comprises:
turning off a first switch of the first branch circuit connected in series with the silicon-based anode lithium-ion battery to block the silicon-based anode lithium-ion battery from charging the capacitor set; or
turning off the second switch of the second branch circuit connected in series with the capacitor set to block the silicon-based anode lithium-ion battery from charging the capacitor set.

26. The charging/discharging method of any one of claims 15-25, **characterized in that** a maximum voltage level of the silicon-based anode lithium-ion battery is lower than a breakdown voltage of the capacitor set.

27. A computer-readable storage medium **characterized in that** the computer-readable storage medium stores computer-readable instructions executable to perform the charging/discharging method of any one of claims 14-26.
